# EUROPÄISCHE PATENTSCHRIFT

(11) **EP 0 789 823 B1**
(45) Veröffentlichungstag und Bekanntmachung des Hinweises auf die Patenterteilung: **13.01.1999**
(21) Anmeldenummer: 95935362.4
(22) Anmeldetag: 26.10.1995
(51) Int. Cl.: F16L 21/035, F16L 37/084

(54) **LÖSBARE VERBINDUNGS- ODER DICHTVORRICHTUNG ZUR ÜBERTRAGUNG AXIALER ZUGKRÄFTE ODER FLUIDDRUCKKRÄFTE**
DETACHABLE CONNECTING OR SEALING DEVICE FOR TRANSMITTING AXIAL TENSILE FORCES OR HYDRAULIC PRESSURE FORCES
SYSTEME DEMONTABLE D'ASSEMBLAGE ET D'ETANCHEITE POUR TRANSMETTRE DES FORCES DE TRACTION AXIALES OU DES FORCES DE PRESSION HYDRAULIQUE

(30) Priorität: 03.11.1994 DE 4439250
(43) Veröffentlichungstag der Anmeldung: 20.08.1997
(73) Patentinhaber: Eckhardt, Hans-Günter, 45136 Essen (DE)
(72) Erfinder: Eckhardt, Hans-Günter, 45136 Essen (DE)
(74) Vertreter: Petra, Elke
(86) Internationale Anmeldenummer: DE9501492
(87) Internationale Veröffentlichungsnummer: WO9614534

(56) Entgegenhaltungen:
- DE-C- 270 219
- DE-C- 477 252
- DE-U- 1 893 770
- US-A- 4 040 651

## Beschreibung

In Konstruktionssystemen mit Verbindungselementen allgemein und insbesondere in Rohrleitungssystemen zum Weiterleiten von Fluiddrücken und Fluidmengen besteht die Anforderung, zwei koaxial ineinander angeordnete Maschinenelemente mit glatten achsparallelen konzentrischen Mantelflächen über den zwischen äußerer und innerer Mantelfläche belassenen Spalt lösbar zu verbinden und zu dichten.

Bisher wird bekanntlich in diesem Spalt ein ein- oder mehrteiliges Verbindungselement oder Dichtelement, das zumindest teilweise aus elastischem, aber druckfestem Werkstoff besteht, mit mindestens zwei Konusflächen, die sich gegenseitig berühren, angeordnet, das eine zylindrische Außen- und Innenfläche aufweist, die mit der Innenfläche des äußeren Maschinenelements und der Außenfläche des inneren Maschinenelements kraftschlüssig verbunden ist.

Solcherart Verbindungs- und Dichtvorrichtungen sind bereits in unterschiedlichen Ausführungsformen bekannt.

So ist aus der DE-PS 477 252 eine Dichtungsmanschette mit U-förmigem Keilspalt aus Metall oder Gummi vorgesehen, an deren zylindrischer Außen- und Innenfläche, welche die Innenfläche des äußeren Maschinenelements und die Außenfläche des inneren Maschinenelements berührt, durch die Keilwirkung eines zwischen-eingetriebenen Ringkeils ein Kraftschluß unter Haftreibung erzeugt wird. Ein gleicher Kraftschluß unter Haftreibung wird aber auch an den Berührungsflächen des Keilspaltes der Dichtungsmanschette mit dem Ringkeil beim Eintreiben des Keiles erzeugt und im Betrieb selbsthemmend aufrechterhalten. Dadurch entsteht eine zwar feste und dichte Rohrverbindung. Diese wirkt aber als starre, sich örtlichen Veränderungen in axialer Richtung nicht selbsttätig anpassende Verbindung. Ein zwischen Niederdruck und Hochdruck wechselnder Betriebszustand trägt weder zur Verstärkung noch zur Entlastung des Halte- und Dichtungsdruckes bei. Zur Montage werden aufwendige Sonderwerkzeuge und -vorrichtungen benötigt.

Des weiteren ist aus der DE-PS 270 219 eine mehrteilige Verbindungs- oder Dichtungsvorrichtung bekannt, mit gemeinsamen Berührungsflächen von Keilringen, die nur durch ihre federringartige Formgebung tangential elastisch sind. Die jeweils von beiden Federringsrändern eingebrachten axialen Schlitze, abwechselnd von rechts und links, machen die Keilringe zu im Durchmesser veränderlichen formelastischen metallischen Federringen. Es ist demnach bekannt, durch mehr oder weniger tiefes Ineinanderschieben von Keilringen radiale Verspannungen mit Haftreibungskraftschluß zu den zu verbindenden Maschinenelementen zu erzeugen. Durch das Ineinanderschieben der Keilringe wird die einhüllende Dichtungsmanschette aus plastisch verformbarem Material fließend gegen das äußere und das innere Maschinenelement verpreßt. Hier ist notwendig, mit äußeren mechanischen Mitteln, z.B. mit Hammerschlägen, gegen nicht von dem eingeschlossenen Fluid berührte Flächen eine unverschiebliche Rohrverbindung herzustellen. Für die Dichtung des Spaltes ist dazu die aufwendige doppelwandige, einerseits mit einem Bodenring verschlossene, andererseits offene Manschette aus teurem plastischem Dichtungsmaterial erforderlich. Zum Dichten gegen Austritt des Fluids ist ein zusätzlicher Dichtungsring erforderlich. Nachteilig ist zunächst die große Anzahl der Einzelteile, der hohe Aufwand für teuren Werkstoff wie z.B. Blei, die teure Anfertigung von axialen Schlitzen durch Sägen oder radiales Schlitzen - schwierig bei kleinen Rohrdurchmessern - sowie aufwendige Montage am verlegten Rohr.

Eine Aufhebung des Form- und Haftreibungsschlusses durch axiale äußere mechanische Kräfte auf die verbundenen und/oder gedichteten Maschinenelemente oder durch Druckunterschiede im Fluid gegenüber dem Druck in der umgebenden Atmosphäre oder in einem anderen umgebenden Fluid ist ohne Zerstörung von Einzelteilen nicht möglich. Verlegte Rohre können also äußeren mechanischen Einflüssen nicht elastisch nachgeben. Bei der großen Härte der Verbindungs- oder Dichtelemente ist keine Schalldämmung zwischen den Maschinenelementen gegeben, bei metallischen Maschinenelementen auch keine Elektroisolation wegen der metallischen Dichtmasse.

Schließlich beschreibt das DE-GM 18 93 770 eine lösbare Verbindungs- und Dichtvorrichtung für keramische Rohrleitungen, bei welcher zum Abdichten des Spaltes zwischen dem äußeren Maschinenelement und dem inneren Maschinenelement ein Dichtungsring aus gummielastischem Werkstoff benutzt wird, der mit einem V-förmigen axialen Querschnitt versehen ist, wobei der den Innenschenkel bildende Ringmantel annähernd zylindrisch und der die Außenfläche bildende Ringmantel kegelstumpfartig ausgebildet ist. Er kann auf das einzusteckende Rohr geschoben werden und beim Einschieben in das äußere Maschinenelement sich von innen gegen den Innenmantel der Muffe pressen. Durch die Maße der Kegelstumpfform bedingt, kann damit eine axiale Haftreibungskraft erzeugt werden, welche einem geringeren hydrodynamischen oder hydrostatischen Druck widerstehen kann. Aber selbst wenn die radiale Steifigkeit zur Erhöhung der formelastischen radialen Anpressung durch erhöhte Härte des elastischen Werkstoffes oder durch zusätzliche radiale Stützrippen vergrößert wird, reicht die radiale Anpressungskraft nicht aus, höheren Fluiddruckkräften zu widerstehen. Deshalb müssen bei dieser Verbindungs- und Dichtungsart die Rohre nach dem Abdichten axial gegeneinandergedrückt und fest verlegt werden.

Aufgabe der Erfindung ist daher, eine lösbare Verbindungs- oder Dichtvorrichtung obengenannter Gattung anzugeben, die eine einfache Montage und eine sich selbsttätig einstellende axiale Verschieblichkeit der Maschinenelemente gegeneinander, bei gleichbleibender Dichtwirkung, erlaubt.

Diese Aufgabe wird durch eine lösbare Verbindungs- oder Dichtvorrichtung genannter Gattung mit den kennzeichnenden Merkmalen des Patentanspruchs 1 gelöst. In den Unteransprüchen 2 bis 7 sind vorteilhafte Ausgestaltungen der Erfindung gekennzeichnet.

Demgemäß besteht das Verbindungs- oder Dichtelement der Vorrichtung insgesamt aus einem elastischen, aber druckfesten Werkstoff. Des weiteren wird während der Montage des Verbindungs- oder Dichtelements auf das innere Maschinenelement bereits eine radiale Vorspannung ausgeübt, die jedoch ein Ineinanderschieben der Maschinenelemente noch zuläßt. Schließlich herrscht zwischen den sich gegenseitig berührenden mindestens zwei Konus-Gleitberührungsflächen Gleitreibung, so daß die Verbindungs- oder Dichtvorrichtung auch nach der Montage während des Betriebes (Fluiddruck, mechanische Zugkräfte) axial beweglich bleibt. Hierdurch wird eine leicht und klein bauende, verschleißarme, einfach herzustellende, ohne Sonderwerkzeug und ohne Sondervorrichtungen zu montierende, schalldämmende und elektrisch isolierende, hochfeste, die zu verbindenden oder zu dichtenden Maschinenelemente schonende, leicht lösbar zu machende Vorrichtung geschaffen.

Die erfindungsgemäß erzielten Vorteile sind vorzugsweise darin zu sehen, daß
- anstelle einer starren Verbindung und Dichtung eine nach der Montage auch im Betrieb wirksam bleibende, sich selbsttätig einstellende axiale Verschieblichkeit der Maschinenelemente gegeneinander vorgesehen wird, die auch eine Mindestgelenkigkeit nach allen Richtungen freiläßt;
- Sonderwerkzeuge und Sondervorrichtungen überflüssig gemacht werden;
- die zwei Konusflächen, die sich gegenseitig berühren, so gestaltet und so angeordnet werden, daß sie für den Haftreibungskraftschluß hohe radiale Anpreßkräfte erzeugen, der axialen Verschieblichkeit nach beiden Richtungen aber geringen Gleitwiderstand entgegensetzen, so daß sie auch bei geringeren mechanischen Axialkräften auf die Maschinenelemente oder bei Fluiddruckkräften anpassende axiale Verschiebebewegungen gegeneinander ausführen;
- die Räume der Haftreibungsflächen-Paarungen gegenüber denen der Gleitreibungspaarungen so getrennt angeordnet werden, daß Schmiermittel nicht von einem Raum in den anderen übertreten können;
- die elastischen, aber druckfesten Verbindungselemente oder Dichtelemente elastisch genug ausgelegt werden, um radiale Vorspannungsdkräfte auf die von ihnen berührten Flächen der Maschinenelemente übertragen zu können;
- die Verbindungs- oder Dichtelemente so gestaltet werden, daß sie sowohl den Zweck der festen Haftung an den Maschinenelementen als auch den der Dichtung gegen das Fluid erfüllen;
- möglichst wenige und möglichst einfache und billig zu erzeugende, unempfindliche Einzelteile vorgesehen werden;
- die Einzelteile der Verbindungs- oder Dichtelemente so ausgebildet und angeordnet werden, daß sie ohne Beschädigung ausgebaut und vielmals wiederverwendet werden können;
- die Verbindungs- oder Dichtelemente schalldämmend und elektrisch isolierend eingebaut werden, und
- die werkstoffeigene Elastizität der Verbindungs- und Dichtelemente und deren Fomrelastizität so eingerichtet wird, daß sie auch unter großer Verformung (im Elastizitätsbereich) und unter hoher Druckbelastung über lange Zeit wirksam bleibt.

Nachfolgend wird die Erfindung anhand von zwei Ausführungsbeispielen unter Bezug auf die Zeichnung näher erläutert.

Es zeigt:
- Abb. 1:: eine Vorrichtung mit einem zweiteiligen Verbindungs- und Dichtelement, und
- Abb. 2:: ein einteiliges Verbindungs- und Dichtelement.

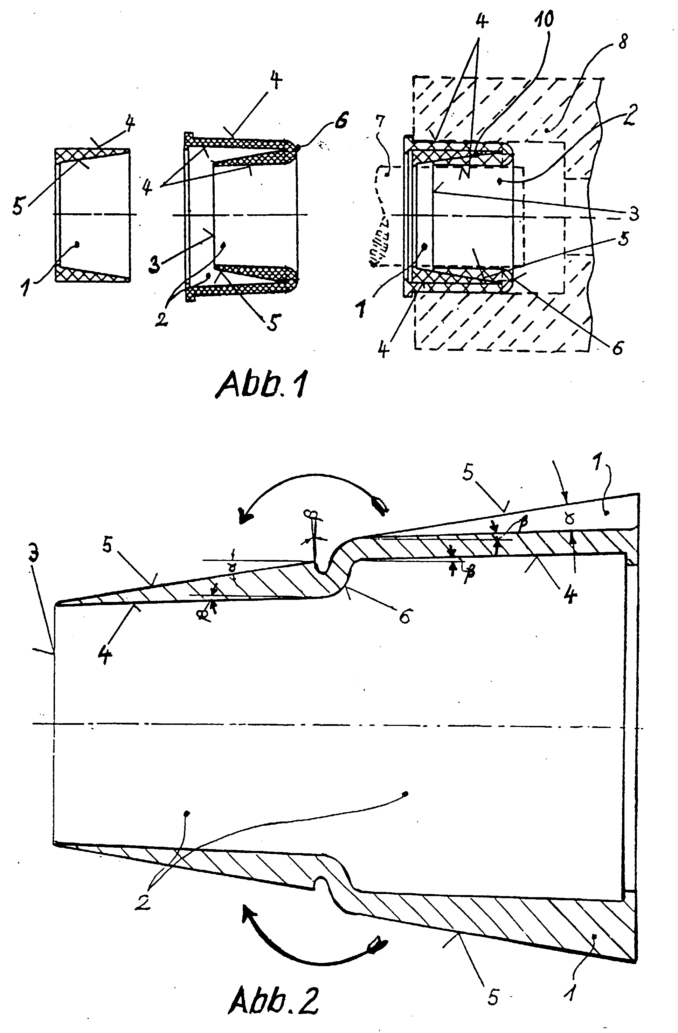

In der Abb. 1 ist als Beispiel des Erfindungsgegenstandes eine zweiteilige Verbindungs- und/oder Dichtvorrichtung dargestellt. Es sind links ein elastischer Außenkeilring (1) und in der Mitte eine elastische Außenbüchse (2) mit nach innen gestülpter Innenkeillippe (3) abgebildet, die aufgrund ihrer Form in spannungsfreiem Zustand ein geringes Übermaß an den Haftberührungsflächen (4) hat. Diese können z.B. außer den gut gleitenden, stärker konischen Gleitberührungsflächen (5) eine schwache Konusform an den Haftberührungsflächen (4) haben, wodurch sie schon beim Einschieben in ihre Sitze geringfügige Haftung haben, was die Montage erleichtert und die nachfolgende Verkeilung durch Montage- bzw. Betriebsdruck begünstigt.

Zur Erzielung solcher Anfangshaftung können auch andere an sich bekannte Mittel angewandt werden, z. B. Übermaße für Außen- bzw. Mindermaße für Innendurchmesser, diese auch in Zusammenwirkung mit einseitigen oder wechselseitigen axialen Längsschnitten durch die Ring- oder Büchsenwände. Bei solchen Schnitten soll der Wulst (6) möglichst nicht mit durchtrennt werden, weil er zwecks guter Dichtung keine Unterbrechung der Umfangslinie haben sollte. Die Haftberührungsflächen (4) können beschichtet werden mit Klebern aller Art, mit Rauhmachern wie Korundpulver o.dgl.. Eine metallische Seite der Haftberühungsflächen (4) kann auch mechanisch oder chemisch aufgerauht werden oder grob unbearbeitet bleiben. Bei den Gleitberührungsflächen (5) kann mit an sich bekannten Mitteln die Gleitfähigkeit durch Schmieren, Polieren oder Gleitbeschichtung, z.B. Teflonisieren, metallisches Verspiegeln, Verglasen u.ä., verbessert werden. Beide elastischen Halte- und/oder Dichtungselemente können zur besseren Halterung und Lagebegrenzung untereinander und an den Maschinenelementen Randwülste haben, voll umlaufend oder unterbrochen, die auch beim Lösen bzw. Öffnen der Verbindung mit einfachen Werkzeugen hintergriffen werden können. Zum gleichen Zweck können auch Metallringe oder -ansätze fest mit den Verbindungs- und/oder Dichtelementen verbunden werden.

Mit (7) ist das innere Maschinenelement (Rohr oder Bolzen) und mit (8) das äußere Maschinenelement (Rohr oder Gehäuse) bezeichnet.

Abb. 2 stellt als weiteres Ausführungsbeispiel des Erfindungsgegenstandes eine einteilige Ausführung für die Verbindungs- und/oder Dichtvorrichtung dar. Der linke Bereich (2) entspricht der elastischen Innenkeillippe (2, 3) der Abb. 1., welche in der Darstellung der Abb. 2 noch nicht von dem elastischen Büchsenteil (2) überstülpt ist. Dieser ist hier homogen mit dem in dieser Darstellung noch außenliegenden Außenkeilringteil (1), welcher dem elastischen Außenkeilring (1) der Abb. 1 entspricht. Dieser wird zur Montage gemeinsam mit dem Büchsenteil (2) nach links, äußerlich über den linken Bereich von (2) gezogen bzw. gerollt, wodurch die Gleitberührungsflächen (5) aufeinandergelegt werden.

Zur Erleichterung dieses Überstülpens kann der keilige Teil (1/2) bis zur Restdicke des Büchsenteils (2) am Umfang mehrfach achsparallele Schlitze haben, um den Restring der Büchse (2) leichter aufweiten zu können. Der Wulst (6) wird dabei nicht durchtrennt und behält seine Dichtfähigkeit.

Die Haftberührungsflächen (4) der rechten Seite liegen nach dem Überstülpen bzw. -rollen auf den Haftgegenflächen der zugehörigen Maschinenelemente.

Die Keilwinkel (α) sind größer als die Vorspannwinkel (β).

Die Verbindung durch Keilwirkung tritt auf, wenn im koaxialen Hohlraum die Spaltfläche durch Fluiddruck beaufschlagt wird. Die Druckkraft treibt dann das in dem konischen Innenkeilteil (2, 3) haftende Innenrohr (7) nach links und schiebt das konische Innenkeilteil (2, 3) längs der Gleitberührungsflächen (5) in den Keilring bzw. den Keilringteil (1) hinein. Dieser spreizt sich auf, der Innenkeilteil (2, 3) wird zusammengepreßt, und die höhere Haltekraft an den Haftflächen (4) verhindert dort jede Relativbewegung in dem Haftreibungspaar, auch bei noch so hohen Fluiddrücken unterhalb des Berstdrucks für das innere Rohr und/oder das äußere Maschinenelement.

Die Verbindung hält auch dicht und fest, wenn das innere Maschinenelement (7) äußerlich axial gegen Auswärtsbewegung abgestützt ist. Dann beaufschlagt der Fluiddruck den Wulstring (6) und spreizt das Keilringteile-Paar (1/2) in gleicher Weise.

An den Keilelementen (1) und (2) können auch gut gleitende Metallfolien oder solche aus Kunststoff auf die Gleitberührungsflächen aufgeklebt werden. Dadurch wird vorteilhafterweise die Einbringung von alternden oder verharzender Schmiermitteln erübrigt.

## Patentansprüche

1. Lösbare Verbindungs- oder Dichtvorrichtung bestehend aus zwei koaxial ineinander unter Belassung eines Spaltes angeordneten Maschinenelementen mit jeweils glatten achsparallelen konzentrischen Mantelflächen, sowie einem dazwischen angeordneten ein- oder mehrteiligen Verbindungs- oder Dichtelement, das teilweise aus elastischem, aber druckfestem Werkstoff besteht, und an welchem mindestens zwei Konusflächen vorhanden sind, die sich gegenseitig berühren, und welches eine zylindrische Außen- und Innenfläche aufweist, die mit der Innenfläche des äußeren Maschinenelements und der Außenfläche des inneren Maschinenelements kraftschlüssig verbunden ist,
**dadurch gekennzeichnet,**
- daß das Verbindungs- oder Dichtelement (1, 2) insgesamt aus einem elastischen, aber druckfesten Werkstoff besteht,
- daß das Verbindungs- oder Dichtelement (1, 2) auf das innere Maschinenelement (7) bereits mit radialer Vorspannung aufgebracht ist,
- daß zwei der sich gegenseitig berührenden Konusflächen Gleitberührungsflächen (5) sind, zwischen denen auch während des Betriebs Gleitreibung herrscht.

2. Vorrichtung nach Anspruch 1, dadurch gekennzeichnet, daß das Verbindungs- oder Dichtelement zweiteilig ausgebildet ist, bestehend aus einem Außenkeilring (1) und einer elastischen Außenbüchse (2) mit nach innen gestülpter Innenkeillippe (2, 3), wobei der Keilring (1) in die Buchse (2) so eingefügt ist, daß zwischen der Innenkonus-Gleitberührungsfläche (5) des Keilrings (1) und der Außenkonus-Gleitberührungsfläche (5) der Innenkeillippe (2, 3) Gleitreibung herrscht.

3. Vorrichtung nach Anspruch 1, dadurch gekennzeichnet, daß das Verbindungs- oder Dichtelement einstückig ausgebildet ist, wobei der Außenkeilring (1) Teil des in montiertem Zustand über die Innenkeillippe ((2, 3) umgestülpten Außenbüchsenteils (2, 1) ist.

4. Vorrichtung nach Anspruch 2 oder 3, dadurch gekennzeichnet, daß zur Erreichung der geringen radialen Vorspannung an den Haftberührungsflächen (4) gegenüber den Maschinenelementen (7, bzw. 8) der äußere Keilringteil (1) mit einem kleinen Konuswinkel (β) nach außen und/oder der innere Keilringteil (2, 3) mit einem kleinen Konuswinkel (β) nach innen gegen die Mittellinie gefertigt wird.

5. Vorrichtung nach einem der Ansprüche 1 bis 4, dadurch gekennzeichnet, daß der Außenkeilring (1) an der offenen, nach außen weisenden Stirnseite einen radial nach innen weisenden Kragen oder Teile davon aufweist und/oder daß die Außenbüchse (2) an der offene äußeren Stirnseite einen radial nach außen weisenden Kragen oder Teile davon aufweist, die als Ansatz für einfache Werkzeuge bzw. als Anschlag für Lagebegrenzung dienen.

6. Vorrichtung nach einem der Ansprüche 1 und 2, dadurch gekennzeichnet, daß eine Verbesserung der Gleitfähigkeit durch Schmieren, Polieren oder Gleitbeschichtung vorgesehen ist.

7. Vorrichtung nach Anspruch 4, dadurch gekennzeichnet, daß zur Haftkrafterhöhung die Haftberührungsflächen (4) der Außenbuchse (2) beschichtet sind z. B. mit Klebern aller Art oder mit Rauhmachern wie Korundpulver, während die Haftberührungsflächen (4) der Maschinenelemente (7, 8) mechanisch oder chemisch aufgerauht werden oder grob bearbeitet bleiben.

## Claims

1. Detachable connecting or sealing device consisting of two machine elements co-axially arranged within one another with a gap between them, and each with smooth axially parallel concentric lateral surfaces, and with a one-piece or multi-part connecting element or sealing element, which is interposed between them and which consists at least partly of elastic but pressure-resistant material, and on which at least two conical surfaces are present that are in contact with each other and has a cylindrical outer and inner surface which are frictionally connected to the inner surface of the outer machine element and the outer surface of the inner machine element,
characterised in that:
- the connecting or sealing element (1,2) consists wholly of an elastic but pressure-resistant material,
- the connecting or sealing element (1, 2) is already mounted on the inner machine element (7) with radial pre-stressing,
- two of the conical surfaces that are in contact with each other are sliding contact surfaces (5), between which, even during operations, sliding friction prevails.

2. Device according to claim 1, characterised in that the connecting or sealing element is constructed in two parts, consisting of an outer conical ring (1) and an elastic outer sleeve (2) with an inner wedge lip inverted to the inside (2, 3), whereby the conical ring (1) is inserted in the sleeve (2) in such a way that sliding friction prevails between the inner cone sliding contact surface (5) of the conical ring (1) and the outer cone sliding contact surface (5) of the inner wedge lip (2,3).

3. Device according to claim 1, characterised in that the connecting or sealing element is constructed as a single piece, whereby the outer conical ring (1) is part of the inverted outer sleeve part (2,1) which in an assembled state is placed over the inner wedge lip (2,3).

4. Device according to claim 2 or 3, characterised in that, to achieve the low radial pre-stress at the static contact surfaces (4) against the machine elements (7, respectively 8), the outer conical ring part (1) is manufactured with a small conical angle (β) to the outside and/or the inner conical ring part (2, 3) is manufactured with a small conical angle (β) to the inside against the centre line.

5. Device according to claims 1 to 4, characterised in that the outer conical ring (1) has a collar or parts thereof pointing radially inwards at the open surface showing towards the outside and/or the outer sleeve (2) at the open outer surface has a collar or parts thereof pointing radially outwards that serve as shoulders for simple tools or as stoppers for position limit stops.

6. Device according to claims 1 and 2, characterised in that the sliding capability can be improved by lubricating, polishing or with a sliding coating.

7. Device according to claim 4, characterised in that, in order to increase the adherence force, the static contact surfaces (4) of the outer sleeve (2) are coated e.g. with all types of adhesive, or with abrasives such as corundum powder, while the static contact surfaces (4) of the machine elements (7, 8) are mechanically or chemically roughened or remain unworked.

## Revendications

1. Dispositif démontable de raccordement ou d'étanchéité, constitué de deux éléments de machine enfilés coaxialement l'un dans l'autre en laissant un intervalle et ayant chacun des surfaces latérales concentriques, lisses et parallèles à l'axe, ainsi qu'un élément de raccordement ou d'étanchéité, en une pièce ou en plusieurs pièces, qui est interposé entre eux et qui est constitué en partie de matériau élastique mais résistant à la pression et sur lequel il est prévu au moins deux surfaces coniques qui sont en contact mutuel, cet élément ayant une surface extérieure et intérieure cylindrique qui sont reliées avec application de force à la surface intérieure de l'élément de machine extérieure et à la surface extérieure de l'élément de machine intérieure,
caractérisé en ce que
- l'élément (1, 2) de raccordement ou d'étanchéité est constitué dans son ensemble d'un élément élastique mais résistant à la pression,
- l'élément (1, 2) de raccordement ou d'étanchéité est monté sur l'élément de machine (7) intérieure en ayant déjà une précontrainte radiale,
- deux des surfaces coniques qui sont en contact mutuel sont des surfaces (5) de contact glissant, entre lesquelles règne un frottement glissant même pendant le fonctionnement.

2. Dispositif suivant la revendication 1, caractérisé en ce que l'élément de raccordement ou d'étanchéité est en deux parties, en étant constitué d'un anneau de serrage externe (1) et d'une douille élastique externe (2) avec une lèvre de serrage retroussée vers l'intérieur (2, 3), l'anneau de serrage (1) et la douille (2) étant montés de façon à réaliser une liaison de glissement entre la surface de glissement du cône interne (5) de l'anneau de serrage (1) et la surface de glissement du cône externe (5) de la lèvre de serrage (2, 3).

3. Dispositif suivant la revendication 1, caractérisé en ce que l'élément de raccordement ou d'étanchéité est d'une seule pièce, l'anneau de serrage externe (1) faisant partie de la douille externe (2, 1) qui est retroussée à l'état monté sur la lèvre de serrage interne (2, 3).

4. Dispositif suivant la revendication 2 ou 3, caractérisé par le fait que pour réaliser la faible précontrainte radiale sur les surfaces de contact (4) avec adhérence par rapport aux éléments de machine (7 et 8), l'anneau de serrage externe (1) fait un petit angle de cône (α) vers l'extérieur, et/ou la partie de serrage interne (2, 3) fait un petit angle de cône (β) vers l'intérieur avec la ligne médiane.

5. Dispositif suivant l'une des revendications 1 à 4, caractérisé par le fait que l'anneau de serrage externe (1) comporte, sur le côté frontal ouvert tourné vers l'extérieur, un collet radial tourné vers l'intérieur ou des portions de collet radial tournées vers l'intérieur, et/ou la douille externe (2) comporte, sur le côté frontal ouvert tourné vers l'extérieur, un collet radial tourné vers l'extérieur ou des portions de collet radial tournées vers l'extérieur, qui servent à mettre des outils simples ou servant de butée de limitation de positionnement.

6. Dispositif suivant l'une des revendications 1 et 2, caractérisé par le fait qu'une amélioration du glissement est prévue par graissage, polissage ou à l'aide d'un revêtement glissant.

7. Dispositif suivant la revendication 4, caractérisé en ce que, pour obtenir une augmentation de la force d'adhérence, les surfaces de contact (4) avec adhérence de la douille externe (2) sont revêtues de colles de tout type ou d'agents de rugosité, comme de la poudre de corindon, tandis que les faces de contact (4) avec adhérence des éléments de machine (7, 8) peuvent également être rendues rugueuses mécaniquement ou chimiquement ou restées brutes d'usinage.
